# EUROPÄISCHE PATENTSCHRIFT

(11) **EP 2 304 302 B1**
(45) Veröffentlichungstag und Bekanntmachung des Hinweises auf die Patenterteilung: **08.08.2012**
(21) Anmeldenummer: 09769248.7
(22) Anmeldetag: 23.06.2009
(51) Int. Cl.: F16L 37/12

(54) **STECKVERBINDUNG FÜR FLUID-LEITUNGEN**
PLUG CONNECTION FOR FLUID CONDUITS
RACCORD EMBOÎTABLE POUR CONDUITES DE FLUIDE

(30) Priorität: 24.06.2008 DE 202008008355 U; 25.06.2008 DE 202008008421 U
(43) Veröffentlichungstag der Anmeldung: 06.04.2011
(60) Teilanmeldung: 12167112.7
(73) Patentinhaber: Voss Automotive GmbH, 51688 Wipperfürth (DE)
(72) Erfinder: LECHNER, Martin, 51789 Lindlar (DE); SCHWARZKOPF, Otfried, 51515 Kürten (DE)
(74) Vertreter: Patentanwälte Dr. Solf & Zapf
(86) Internationale Anmeldenummer: PCT/EP2009/057818
(87) Internationale Veröffentlichungsnummer: WO 2009/156399

(56) Entgegenhaltungen:
- EP-A1- 1 806 528
- EP-A1- 1 821 058
- EP-A2- 1 873 439
- DE-A1- 3 047 867
- DE-A1-102007 025 406
- DE-U1-202004 012 795
- FR-A1- 2 856 770
- US-A- 3 930 674

## Beschreibung

Die vorliegende Erfindung betrifft eine Steckverbindung für Fluid-Leitungen, bestehend aus zwei zusammensteckbaren Kupplungsteilen, und zwar einem Muffenteil und einem Steckerteil, wobei das Steckerteil mit einem Steckerschaft dichtend in eine Aufnahmeöffnung des Muffenteils einsteckbar und im eingesteckten Zustand über eine Verriegelungseinrichtung lösbar arretierbar ist, wobei die Verriegelungseinrichtung einerseits aus zwei äußeren, radialen, flanschartigen und im eingesteckten Zustand axial in Steckrichtung benachbarten Haltestegen der beiden Kupplungsteilen und andererseits aus einem Halteelement besteht, welches mit mindestens einem im Axialschnitt C-förmigen Halteabschnitt die Haltestege der beiden Kupplungsteile axial und radial umgreift, wobei das Halteelement ringförmig ausgebildet ist und mit einer umfangsgemäß geschlossenen Ringkontur in einem Vormontagezustand und im Montagezustand mindestens eines der beiden Kupplungsteile umgibt, wobei das Halteelement derart ausgebildet und an einem der beiden Kupplungsteile derart unverlierbar vormontierbar ist, dass es einerseits axial und radial fixiert und andererseits im Bereich des Halteabschnittes radial elastisch beweglich ist.

In diesem Zusammenhang ist der Begriff "Fluid" als beliebiges, flüssiges und/oder gasförmiges Strömungs- bzw. Druckmittel zu verstehen. Somit eignet sich die Steckverbindung sowohl für hydraulische als auch für pneumatische sowie für hydropneumatische Anwendungen. Ein bevorzugtes Anwendungsgebiet der erfindungsgemäßen Steckverbindung ist aber die Verbindung von Kraftstoffleitungen in Kraftfahrzeugen.

Unter dem Begriff "ringförmig" werden dabei - wie nachfolgend noch im Detail dargestellt - nicht nur kreisringförmige Ausbildungen der Kontur des Halteelementes, sondern auch Konturen mit elliptischer oder schlüssellochartiger Ausbildung subsummiert.

Aus der DE-U-20 2004 012 795 ist eine Steckverbindung bekannt, bei der von dem bekannten Verriegelungsprinzip ausgegangen wird, dass ein C-förmiger Halteabschnitt Haltestege von Kupplungsteilen formschlüssig umgreift. Um die Verlustgefahr des Halteelementes zu reduzieren und die Montage, besonders auch in Anwendungsfällen, bei denen am Montageort nur ein kleiner Umgebungsraum zur Verfügung steht oder bei denen in den Kupplungsteilen mindestens ein Ventil integriert sein soll, zu vereinfachen, ist vorgesehen, dass das Halteelement derart ausgebildet und an dem einen der beiden Kupplungsteile derart unverlierbar vormontiert bzw. vormontierbar ist, dass es einerseits axial spielarm und radial verliersicher fixiert und andererseits im Bereich des Hatteabschnittes radial elastisch beweglich ist. Dabei sind das Halteelement im Bereich des Halteabschnittes sowie der Haltesteg des anderen Kupplungsteils in Anpassung aneinander zur Bildung einer in Steckrichtung wirkenden, formschlüssigen Rastverbindung derart ausgebildet, dass beim Zusammenstecken der Kupplungsteile der Halteabschnitt durch den sich dazu relativ bewegenden Haltesteg radial nach außen bewegt wird und nachfolgend im eingesteckten Zustand durch radiale Zurückbewegung nach innen die Haltestege der beiden Kupplungsteile zur Verriegelung umgreift.

Obwohl diese Steckverbindung sich grundsätzlich in der Praxis bewährt hat, insofern sie eine einfache, schnelle und komfortable sowie auch sehr sichere Einhand-Montage ermöglicht, und zwar vorteilhafterweise auch an Montageorten mit geringem Umgebungsraum in radialer Richtung, hat es sich gezeigt, dass es unter bestimmten Umständen bei einer Demontage der Steckverbindung vorkommen kann, dass ein gelöstes Halteelement verloren geht. Um in diesem gelösten Zustand die Verlustgefahr zu reduzieren, sieht die DE-U-20 2004 012 795 vor, das Halteelement über ein zusätzliches Sicherungselement verliersicher mit dem einen Kupplungsteil zu verbinden. Dieses Sicherungselement ist band- oder schnurartig ausgebildet und einendig mit dem Kupplungsteil sowie anderendig mit dem Halteelement verbunden.

Eine Steckverbindung der eingangs genannten Art ist aus der EP 1 806 528 A1 bekannt. Die bekannte Verbindungsanordnung enthält ein über mehr als 240° weitgehend kreisförmig gebogenes Federband aus Stahl, dessen axiale Enden nach innen gerichtete Flansche mit weitgehend kreisbogenförmiger, zur Mittelachse koaxialer Innenkante aufweisen, die hinter Halterippen eingreifen und wenigstens auf der den Umfangsenden des Federbandes gegenüberliegenden Seite des Federbandes unterbrochen sind, wobei zwei Rohrstutzen von miteinander zu verbindenden Fluidaufnahmeteilen teilweise ineinandergesteckt sind und die ineinandergesteckten Teile der Rohrstutzen durch wenigstens einen Dichtring gegeneinander abgedichtet sind. Sich überlappende Endabschnitte des Federbandes sind mit Löchern zur Einführung eines Spreizwerkzeugs versehen. Die Überlappung dient dazu, dass man sich beim Ein- oder Auskuppeln der Rohrstutzen nicht einen Teil der Hand einklemmt. Die Notwendigkeit der Verwendung eines Spreizwerkzeugs bzw. das Vorhandensein einer Unfallgefahr durch Einklemmen der Hand sind dabei als nachteilig anzusehen,

Der vorliegenden Erfindung liegt die Aufgabe zu Grunde, unter Beibehaltung der Vorteile der bekannten Steckverbindung der genannten Art, insbesondere einer geringen Verlustgefahr des Halteelementes, eine derartige Steckverbindung so zu verbessern, dass mit verringertem Aufwand eine Positionierung des Halteelementes und die Wiedermontage erleichtert wird.

Gemäß einer ersten Ausführung der Erfindung wird diese Aufgabe dadurch gelöst, dass das Halteelement derart vormontierbar ist, dass es ausschließlich in zwei Positionen, der Vormontagestellung und der Montagestellung, fixierbar und durch eine radiale Verschiebung aus der Vormontagestellung in die Montagestellung beweglich ist.

Gemäß einer zweiten Ausführung der Erfindung wird diese Aufgabe dadurch gelöst, dass das Halteelement zweiteilig ausgebildet ist und aus einer ersten Haltekomponente und einer zweiten Haltekomponente besteht, die lösbar miteinander verbindbar, insbesondere miteinander verschraubbar oder verrastbar, sind.

Erfindungsgemäß ist somit vorteilhafterweise eine aufwandsarme, jedoch hoch effiziente Verllersicherung für das Halteelement geschaffen. Weder im Vormontagezustand noch im Montagezustand kann das Halteelement von den Kupplungteilen bzw. zumindest von einem Kupplungsteil ohne ein axiales Herausziehen entfernt werden. Dabei ist kein zusätzliches Sicherungselement notwendig, so dass sich der Montageaufwand verringert.

Im Vormontagezustand kann dabei durch ein axiales Einstecken des Kupplungsteils in die Ringöffnung des Halteelementes eine zunächst lose unverlierbare Vormontage erfolgen, wobei danach durch eine radiale Verschiebung eine gegenseitige Fixierung der Bauteile bewirkt werden kann.

Des Weiteren besteht auch die Möglichkeit, das Halteelement bereits in einer Position auf einem der Kupplungsteile vorzumontieren, die bereits seiner Endposition nach der vollständigen Montage der erfindungsgemäßen Steckverbindung entspricht. Hierzu kann das Halteelement wiederum zunächst axial gesteckt, aber dann mit dem entsprechenden Kupplungsteil verrastet werden.

Schließlich ist es auch möglich, das ringförmige Halteelement derart zu gestalten, dass der Ring geöffnet und geschlossen werden kann, so dass ein axiales Stecken in das Halteelement zur Vormontage nicht notwendig ist.

Insofern das Halteelement erfindungsgemäß durch eine einfache radiale Verschiebung aus der Vormontagestellung in die Montagestellung bewegt werden kann bzw. die Haftekomponenten auf einfache Weise miteinander zu verbinden und auch wieder zu lösen sind, ist die Verwendung eines Spreizwerkzeugs nicht notwendig bzw. das Vorhandensein einer Unfallgefahr durch Einklemmen der Hand nicht gegeben.

Weitere vorteilhafte Ausgestattungsmerkmale der Erfindung sind in den Unteransprüchen sowie der folgenden Beschreibung enthalten.

Anhand mehrerer bevorzugter Ausführungsbeispiele soll im Folgenden die Erfindung näher erläutert werden. Dabei zeigen:
- Fig. 1: eine perspektivische Explosionsdarstellung der Bestandteile einer erfindungsgemäßen Steckverbindung der ersten Ausführung ohne ein Halteelemente,
- Fig. 2: eine Darstellung eines Axialschnitts durch eine erfindungsgemäße Steckverbindung gemäß Fig. 1, jedoch mit dem Halteelement,
- Fig. 3: teilweise aufgebrochen, eine vergrößerte Darstellung eines Querschnitts durch eine erfindungsgemäße Steckverbindung gemäß einem Schnitt entlang der Linie III-III in Fig. 2,
- Fig. 4 und Fig. 4a: in zwei verschiedenen Ausführungsformen jeweils eine Seitenansicht zu der Darstellung des Halteelements in Fig. 3,
- Fig. 5: eine stark vergrößerte Darstellung eines Ausschnitts aus einem axialen Halbschnitt durch ein Halteelement einer weiteren Ausführung einer erfindungsgemäßen Steckverbindung,
- Fig. 6: in einer Darstellung wie in Fig. 5, eine zu Fig. 5 alternative Ausführung eines Halteelementes einer erfindungsgemäßen Steckverbindung der ersten Ausführung,
- Fig. 7: eine Stirmansicht eines Halteelementes einer alternativen Ausrührung einer erfindungsgemäßen Steckverbindung der ersten Ausführung,
- Fig. 8: eine Stimansicht eines Halteelementes einer alternativen Ausführung einer erfindungsgemäßen Steckverbindung der ersten Ausführung,
- Fig. 9 bis 12: Montagephasen eines Halteelementes einer alternativen Ausführung einer erfindungsgemäßen Steckverbindung der ersten Ausführung,
- Fig. 13 und 14: in zwei unterschiedlichen Hauptansichten, ein Halteelement einer alternativen Ausführung einer erfindungsgemäßen Steckverbindung der ersten Ausführung,
- Fig. 15: eine separate erste Haltekomponente eines Halteelementes einer erfindungsgemäßen Steckverbindung der zweiten Ausführung,
- Fig. 16: in einem axialen Halbschnitt, die Ausführung einer erfindungsgemäßen Steckverbindung im Montagezustand der zweiten Ausführung,
- Fig. 17: in einer Darstellung wie in Fig. 16, eine zu Fig. 16 alternative Ausführung einer separaten zweiten Haltekomponente des Halteelementes, die mit der ersten Haltekomponente verbunden ist,
- Fig. 18: in einer perspektivischen Explosionsdarstellung, eine weitere Ausführung einer erfindungsgemäßen Steckverbindung der ersten Ausführung,
- Fig. 19: teilweise axial geschnitten, die in Fig. 18 gezeigte erfindungsgemäße Steckverbindung im Vormontagezustand,
- Fig. 20: in perspektivischer Darstellung, eine zu der in Fig. 18 gezeigten Ausführung einer alternative Ausführung erfindungsgemäßen Steckverbindung der ersten Ausführung.

In den verschiedenen Figuren der Zeichnung sind gleiche Teile stets mit den gleichen Bezugszeichen versehen, so dass sie in der Regel auch nur einmal beschrieben werden.

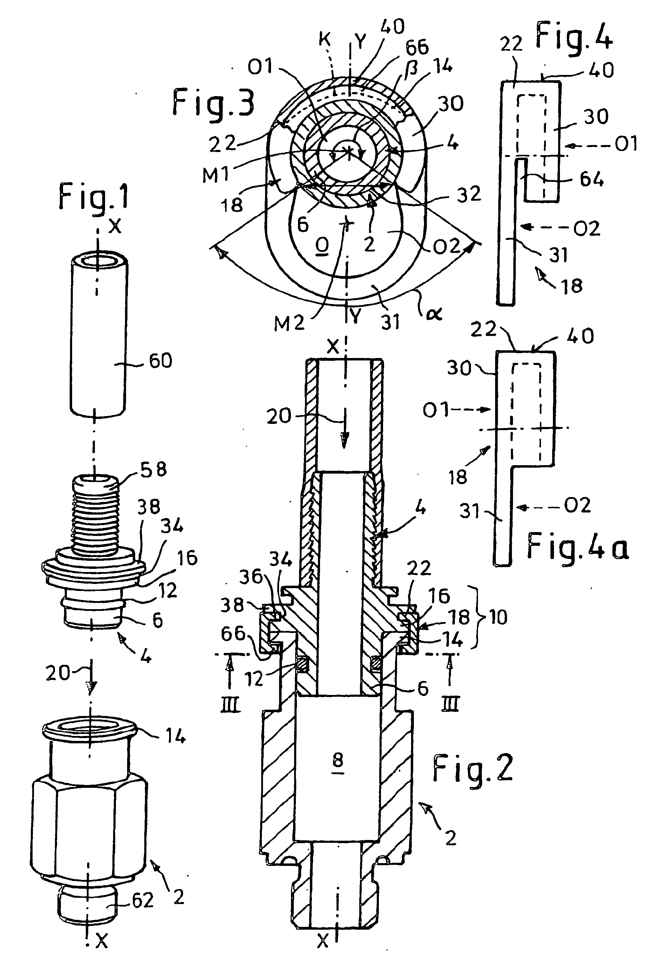

Fig. 1 bis 4 beziehen sich zunächst auf eine erste Ausführung einer erfindungsgemäßen Steckverbindung. Wie zunächst aus den zeichnerischen Darstellungen zu ersehen ist, besteht eine erfindungsgemäße Steckverbindung aus zwei Kupplungsteilen, und zwar aus einem Muffenteil 2 und einem Steckerteil 4. Die beiden Kupplungsteile 2, 4 bestehen bevorzugt aus Metall, insbesondere aus Messing, oder aus Kunststoff, insbesondere aus einem glasfaserverstärktem Polyamid.

Das Steckerteil 4 ist mit einem Steckerschaft 6 entlang seiner Längsachse X-X dichtend in eine Aufnahmeöffnung 8 des Muffenteils 2 einsteckbar und im eingesteckten Zustand über eine Verriegelungseinrichtung 10 lösbar arretierbar. Zur Abdichtung ist eine Umfangsdichtung, insbesondere in Form eines in einer Ringnut am Steckerschaft 6 angeordneten Dichtrings 12, vorgesehen.

Die Verriegelungseinrichtung 10 besteht einerseits aus zwei äußeren, radialen, flanschartigen Haltestegen 14, 16 der beiden Kupplungsteile 2, 4 und andererseits aus einem Halteelement 18. Die Haltestege 14, 16 liegen im eingesteckten Zustand axial (X-X), in der durch den Pfeil 20 veranschaulichten Steckrichtung einander benachbart. Das Halteelement 18 umgreift mit mindestens einem im Axialschnitt C-förmigen Halteabschnitt 22 die Haltestege 14 und 16 der beiden Kupplungsteile 2, 4 axial und radial formschlüssig. Dieser Verriegelungszustand ist in Fig. 1 und 2 dargestellt.

Erfindungsgemäß ist - wie insbesondere Fig. 3 zeigt - vorgesehen, dass das Halteelement 18 ringförmig ausgebildet ist. Hierbei weist das Halteelement 18 eine umfangsgemäß geschlossene Kontur mit einer zentralen Ringöffnung O auf. Sowohl die Außenkontur des Halteelementes 18, als auch die Ringöffnung O brauchen dabei nicht kreisförmig zu sein, sondern es sind unterschiedliche Formgestattungen möglich.

Wichtig ist dabei jedoch erfindungsgemäß, dass das Halteelement 18 in einem Vormontagezustand und im Montagezustand mindestens eines der beiden Kupplungsteile 2, 4 umgibt. Mindestens eines der beiden Kupplungsteile 2, 4 befindet sich also in der Ringöffnung O und wird von der Ringkontur des Halteelementes 18 umschlossen, wobei darunter verstanden wird, dass diese Umschließung an die Form des Kupplungsteiles 2, 4 angepasst - also spaltfrei - oder auch mit Abstand zur Außenkontur des Kupplungsteiles 2, 4 vorliegen kann. Im Montagezustand wird der Verbund aus beiden Kupplungsteilen 2, 4 vom Halteelement 18 umgehen, wobei beide Kupplungsteile 2, 4 oder vorzugsweise nur das Steckerteil 4 vollständig umschlossen sind. Das bedeutet, dass im Montagezustand, in dem die beiden Kupplungsteile 2, 4 miteinander mittels des Halteelementes 18 miteinander verbunden sind, weder das eine Kupplungsteil 2, noch das andere Kupplungsteil 4, ohne eventuell durchführbare Demontageschritte aus der Ringöffnung O entfernt werden können. Somit ist vorteilhafterweise in einfacher Weise eine wirksame Verliersicherung für das Halteelement 18 an den Kupplungsteilen 2, 4 geschaffen, ohne dass dazu zusätzliche Bauteile notwendig wären.

Das Halteelement 18 kann an einem der beiden Kupplungsteile 2, 4, zum Beispiel in einer erfindungsgemäßen Ausführungsform der Erfindung an dem Steckerteil 4 solchermaßen unverlierbar vormontiert bzw. vormontierbar sein, dass das Halteelement 18 und das Kupplungsteil 4 in Anpassung aneinander derart ausgebildet sind, dass das Halteelement 18 einerseits in axialer Richtung spielarm und in radialer Richtung verliersicher fixiert sowie andererseits im Bereich jedes Halteabschnittes 22 radial elastisch beweglich ist.

Bevorzugtgemäß der ersten Ausführung der Erfindung, ist das Halteelement 18 als einteiliger Ring mit einem elastisch verformbaren Klammerabschnitt 30 ausgebildet. Bei dieser bevorzugten Ausführung ist an keiner Umfangsstelle des Halteelementes 18 eine axial und radial durchgehende Schlitzunterbrechung vorgesehen, der Ring ist geschlossen.

Der Ring ist zumindest im Bereich des Klammerabschnitts 30 zur Erzielung einer radial elastischen Verformbarkeit aus einem entsprechenden Material gefertigt bzw. weist entsprechend dimensionierte geometrische Abmessungen, insbesondere Materialstärken des Ringkörpers, auf. Ein gewünschtes Biegemoment zum radialen Aufweiten des Ringes, welches insbesondere charakteristisch für ein hart- oder zähelastisches Verhalten ist, kann durch den Elastizitätsmodul und das sogenannte Flächenträgheitsmoment des Querschnitts des Klammerabschnitts 30 eingestellt werden.

Zur Fixierung des Halteelementes 18 weist das zugehörige Kupplungsteil 2, 4, bevorzugt das Steckerteil 4, eine radiale Ringnut 34 zur Aufnahme eines korrespondierenden radialen Ringbundes 36 des Halteelementes 18 auf. Der Ringbund 36 ist durch eine quer zur Steckrichtung 20 gerichtete, radiale Einführbewegung des Klammerabschnitts 30 unter elastischer Aufweitung des Klammerabschnitts 30 in die Ringnut 34 einführbar.

Hierzu wird auf die Darstellungen in Fig. 3 und 4 hingewiesen, die zwar die Endmontagestellung - also ebenfalls die Präsenz des zweiten Kupplungsteils, des Muffenteils 2 - zeigen, jedoch kann aber das Halteelement 18 in der Vormontagestellung genauso positioniert sein wie in der Endmontagestellung. Dies ist nachfolgend für die zweite und dritte Ausführungform der Erfindung im Detail beschrieben. Es wird - wie noch dargestellt werden wird - nur das andere Kupplungsteil 2 noch zusätzlich angeschlossen.

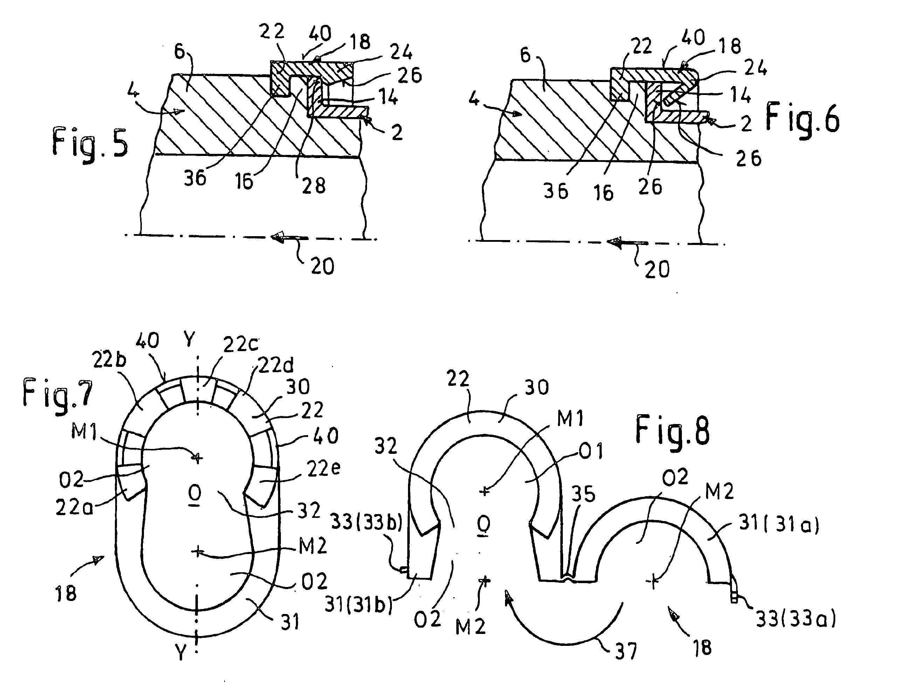

Vorzugsweise ist die radiale Ringnut 34 - wie Fig. 1 und 2 zeigen - axial zwischen dem Haltesteg 16 und einem zusätzlichen Fixierringsteg 38 gebildet. Wie die weiteren Ausführungen der ersten Ausführung der Erfindung (Fig. 5, 6, 11, 12) zeigen, ist die Anwesenheit eines solchen Steges 38 jedoch optional, weil die Ringnut 34 auch direkt in den Körper des Steckerschaftes 6 eingebracht werden kann. Während der Haltesteg 16 des Steckerteiles 4 und der Haltesteg 14 des Muffenteils 2 zur Vermeidung des Auftretens von Kipp- und Biegemomenten mit gleichen Außendurchmessern ausgebildet sind und über jeweils eine Ringfläche aneinander anliegen, die auch jeweils einen gleichen Innendurchmesser hat, liegen die Verhältnisse für den Fixierringsteg 38 anders. Der Fixierringsteg 38 weist einen Durchmesser auf, der größer als der Durchmesser des Haltesteges 16 ist.

Konkret entspricht der jeweilige Durchmesser der Haltestege 14, 16 vorzugsweise etwa dem Innendurchmesser des Klammerabschnitts 30 in den an den Ringbund 36 angrenzenden Innenflächenbereichen der Halteabschnitte 22, während der Durchmesser des Fixierringstegs 38 etwa dem Außendurchmesser des Halteelementes 18 entspricht.

Zur Vormontage, Montage bzw. Demontage kann der Klammerabschnitt 30 jeweils etwas weiter elastisch gespreizt bzw. aufgeweitet werden. Die Fixierung erfolgt somit durch ein kraftformschlüssiges Aufrasten in Querrichtung. Dabei weist in einem beim Steckvorgang maximal gespreizten Zustand des Klammerabschnitts 30 dessen Ringbund 36 einen Innendurchmesser auf, der etwa gleich dem oder etwas größer als der Durchmesser des Haltesteges 16, jedoch in jedem Fall kleiner als der Durchmesser des größeren Fixierringsteges 38 ist. Diese Ausgestaltung gewährleistet eine sichere axiale Abstützung des Klammerabschnitts 30 beim Steckvorgang am Fixierringsteg 38.

Wie Fig. 3 zeigt, erstreckt sich der Klammerabschnitt 30 über einen Umfangs- oder Umschlingungswinkel β, der mindestens derart groß bemessen ist, dass im beim Steckvorgang maximal gespreizten Zustand in dem Klammerabschnitt 30 ein umfangsgemäß offener Bereich 32 entsteht, der bezüglich seiner lichten Öffnungsweite stets kleiner als der jeweils zugehörige Durchmesser des Steckerteils 4 im Bereich seines Steckerschaftes 6 ist. Dadurch wird erreicht, dass der Klammerabschnitt 30 das Steckerteil 4 in jedem Bereich seiner axialen Erstreckung über mehr als 180° umgreift. Auf diese Weise ist das Halteelement 18 am Steckerteil 4 fixiert. Bei der dargestellten Ausführung beträgt der Umfangswinkel β des Klammerabschnitts 30 etwa 240°, so dass sich der umfangsgemäß offene Bereich über einen Öffnungswinkel α von ca. 120° erstreckt.

Es war bereits ausgeführt worden, dass das Halteelement 18 eine umfangsgemäß geschlossene Kontur mit einer zentralen Ringöffnung O aufweist. Die geschlossene Kontur wird dabei dadurch erreicht, dass der Klammerabschnitt 30 durch einen Sicherungsabschnitt 31 zu einem Vollring ergänzt wird.

Hierbei ist es mit Vorteil möglich, dass die beiden Abschnitte 30, 31 aus unterschiedlichen Materialien bestehen. Für den Klammerabschnitt 30 ist es - wie oben erwähnt - wichtig, dass er radial aufweitbar ist, zugleich aber eine ausreichende Festigkeit und Haltekraft für die Kupplungteile 2, 4 aufweist und ein hartelastisches Verhalten zeigt. Ein bevorzugtes Material für den Klammerabschnitt 30 ist daher beispielsweise ein glasfaserverstärktes Polyamid, welches einen Faseranteil im Bereich von 20 bis 50 Prozent enthält.

An den Sicherungsabschnitt 31 werden derartige Forderungen nicht gestellt. Dieser kann beispielsweise mit Vorteil weichelastisch sein, damit er eine hohe Verformbarkeit aufweist. Der Sicherungsabschnitt 31 kann daher vorzugsweise aus einem glasfaserverstärkten Polyamid, welches einen Faseranteil im Bereich von 0 bis 20 Prozent aufweist, oder aus einem thermoplastischen Elastomer hergestellt sein. Das Halteelement 18 mit seinen beiden Abschnitten 30, 31 kann dabei als Formteil in technologisch vorteilhafter Weise in einem Zwei-Komponenten-Spritzgieß-Verfahren gefertigt werden.

Es war auch schon ausgeführt worden, dass sowohl die Außenkontur, als auch insbesondere die Ringöffnung O des Halteelementes 18 nicht kreisförmig zu sein brauchen. Wie in der ersten Ausführung vorgesehen und insbesondere in Fig. 3 gezeigt, ist mit Vorteil eine Formgestaltung möglich, bei der die Ringöffnung O im Querschnitt gesehen aus einer ersten kreisförmigen Teilöffnung O1 mit dem Mittelpunkt M1 innerhalb des Klammerabschnitts 30 und aus einer zweiten kreisförmigen Teilöffnung 02 mit dem Mittelpunkt M2 innerhalb des Sicherungsabschnitts 31 des Halteelements 18 gebildet sind, wobei sich die beiden Teilöffnungen 01, 02 durchdringen. Insbesondere können sich die Teilöffnungen 01, 02 derart durchdringen, dass die Ringöffnung O im Querschnitt gesehen die Form einer in der Mitte unvollständig eingeschnürten Acht aufweist. Eine deutlichere Darstellung dieser Art der Formgestaltung der Ringöffnung O als Fig. 3 zeigt auch die Ausführung gemäß Fig. 7. Dadurch wird erreicht, dass das Halteelement 18 derart an mindestens einem der beiden Kupplungsteile 2, 4, vorzugsweise dem Steckerteil 4, unverlierbar vormontierbar ist, wobei es ausschließlich in zwei Positionen, der Vormontagestellung und der Montagestellung, fixierbar und durch eine radiale Verschiebung aus der Vormontagestellung in die Montagestellung beweglich ist.

Die Bedeutung einer derartigen Formgestaltung der Ringöffnung O ist somit darin zu sehen, dass das vorzumontierende Kupplungsteil, also beispielsweise bevorzugt das Steckerteil 4, zur Herstellung des Vormontagezustandes durch ein axiales Einstecken in die innerhalb des Sicherungsabschnitts 31 liegende Teilöffnung 02 des Halteelementes 18 gebracht wird. Hierdurch kann eine zunächst relativ lose unverlierbare Vormontage erfolgen, es kann aber auch vorgesehen sein, dass das Kupplungsteil 4 formschlüssig und gegebenenfalls auch kraftschlüssig durch den Sicherungsabschnitt 31 in der Teilöffnung 02 umfasst und damit schon in der Teilöffnung 02 vorfixiert wird, so dass - in bevorzugter Weise für die erste Ausführung der Erfindung - diese Position den Vormontagezustand darstellt.

Danach ist es zur Endmontage möglich, das jeweils andere Kupplungteil, im vorliegenden Fall insbesondere das Muffenteil 2, zu stecken und die beiden verbundenen Bauteile 2, 4 durch eine radiale Verschiebung unter elastischer Aufweitung der Ringöffnung O zur radialen und gegenseitigen Fixierung in die erste Teilöffnung O1 zu bewegen, wie dies unter Bezugnahme auf Fig. 3 bereits erläutert wurde.

Wie ebenfalls bereits erwähnt und insbesondere durch die beiden nachfolgenden, durch Fig. 5 und 6 veranschaulichten Ausführungsbeispiele deutlich wird, kann aber auch vorgesehen sein, zur Endmontage das jeweils andere Kupplungsteil 2 erst dann zu stecken, wenn das vormontierende Kupplungsteil 4 bereits durch eine radiale Verschiebung unter elastischer Aufweitung der Ringöffnung O aus der zweiten Teilöffnung 02 in die erste Teilöffnung 01 bewegt wurde. In diesem Fall stellt die Position des Kupplungsteils 4 in der ersten Teilöffnung 01 innerhalb des Klammerabschnitts 30 die Vormontageposition dar.

Damit das jeweils andere Kupplungsteil 2 bei dieser Vormontageposition der Endmontage zugeführt werden kann, ist gemäß der ersten Ausführung der Erfindung vorgesehen, dass das Halteelement 18 im Bereich des Halteabschnittes 22 sowie der Haltesteg 14 des anderen Kupplungsteils 2 in Anpassung aneinander zur Bildung einer in Steckrichtung formschlüssigen Rastverbindung ausgebildet sind. Beim Zusammenstecken der Kupplungsteile 2, 4 wird dabei der Halteabschnitt 22 durch den sich dazu relativ bewegenden Haltesteg 14 radial nach außen bewegt und umgreift nachfolgend im eingesteckten Zustand durch radiale Zurückbewegung nach innen die Haltestege 14, 16 der beiden Kupplungsteile 2, 4 zur Verriegelung, wie Fig. 5 und 6 zeigen.

Für diese Verrastung weist das Halteelement 18 im Bereich jedes Halteabschnittes 22 auf der beim Steckvorgang dem anderen Kupplungsteil 2 zugewandten Seite mindestens ein Rastelement 24 auf. Das Rastelement 24 weist auf seiner in Steckrichtung 20 vorderen, dem anderen Kupplungsteil 2 zugewandten Seite eine radial innere Schrägfläche 26 sowie auf seiner gegenüberliegenden Seite eine radiale Haltekante 28 auf. Durch den sich beim Stecken relativ bewegenden Haltesteg 14 wird über die Schrägfläche 26 eine radial nach außen gerichtete Spreizbewegung des jeweiligen Rastelementes 24 bewirkt, bis dieses anschließend, indem es zurückfedert, mit der radialen Haltekante 28 den Haltesteg 14 rastend formschlüssig hintergreift.

In vorteilhafter Ausgestaltung ist der im Axialschnitt C-förmige Halteabschnitt 22 von einem der Rastelemente 24, einem axial gegenüberliegenden Umfangsabschnitt des Ringbundes 36 sowie einem Teil einer Umfangswandung 40 des Klammerabschnitts 30 gebildet.

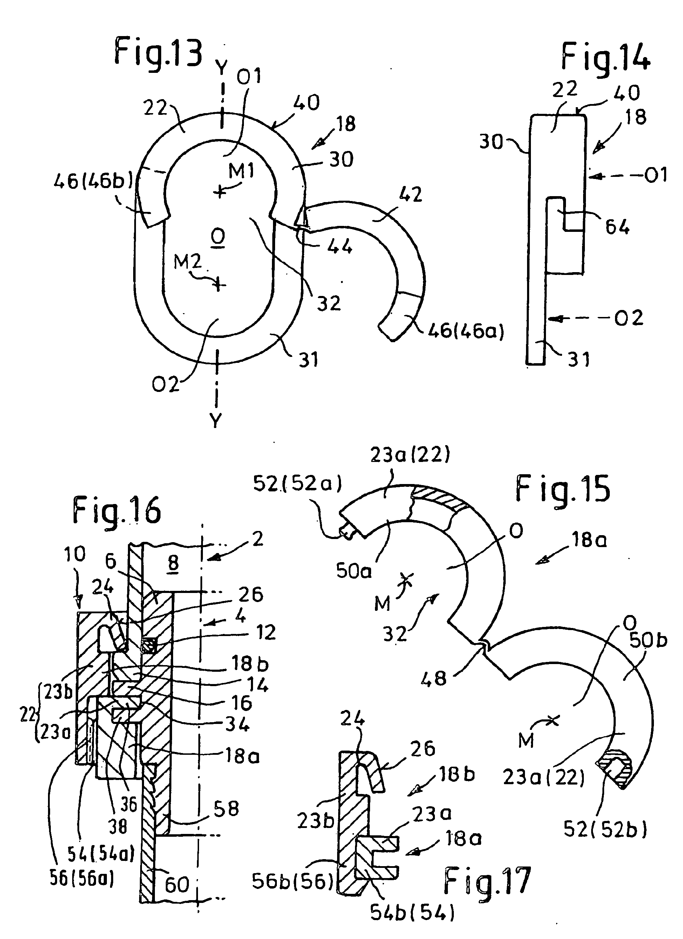

In Fig. 3 und 4 sind unterschiedliche bevorzugte Formen der Halteelemente 24 dargestellt. Fig. 13 zeigt ein massives Halteelement 24, bei dem der eine Querbalken des C gegenüber dem anderen verkürzt ist, während Fig. 4 ein Halteelement 24 zeigt, bei dem der entsprechende Querbalken des C dünner und länger ausgeführt und hakenartig in die Einsteckrichtung 20 gebogen ist.

Es sei in diesem Zusammenhang bemerkt, dass hinsichtlich der miteinander rastenden Teile auch eine kinematische Umkehr möglich ist, indem eine entsprechende Schrägfläche am Haltesteg 14 gebildet sein kann, um den Halteabschnitt 22 radial zu spreizen.

Während gemäß der Ausführung in Fig. 3 der Halteabschnitt 22 integral über den Klammerabschnitt 30 ausgebildet ist, zeigt die vierte Ausführung der Erfindung in Fig. 7 eine Segmentierung des Halteabschnitts 22 in Einzelhalteelemente 22a, 22b, 22c, 22d, 22e. Diese Ausführung ist besonders günstig in Kombination mit Ausführungen, bei denen wie gemäß Fig. 5 und 6 eine Verrastung vorgesehen ist. Die voneinander beabstandeten Einzelhalteelemente 22a, 22b, 22c, 22d, 22e - und somit auch die gegebenenfalls vorhandenen mehreren komplementären Rastelemente 24 - sind mit im dargestellten Fall einer Anzahl von insbesondere fünf symmetrisch zu einer axial und mittig durch die Mittelpunkte M1, M2 der Teilöffnungen 01, 02 verlaufenden Mittelebene Y-Y angeordnet. Dadurch sind jeweils in den Bereichen zwischen zwei Einzelhalteelementen 22a/22b, 22b/22c, 22c/22d, 22d/22e durch einen Abschnitt der Umfangswandung 40 mit geringerer Dicke eine Art von Gelenken gebildet, die das Aufspreizen des Klammerabschnitts 30 erleichtern. Die Federsteifigkeit des aus den Einzelhalteelementen 22a, 22b, 22c, 22d, 22e gebildeten Halteabschnittes 22 sollte dabei aber über den Umfang des Klammerabschnittes 30 hinweg möglichst gleichmäßig verlaufen.

Bei der in Fig. 8 dargestellten weiteren Ausführung einer erfindungsgemäßen Steckverbindung der ersten Ausführung weist das Halteelement 18 eine Ausbildung auf, bei weicher die aus dem Klammerabschnitt 30 und dem Sicherungsabschnitt 31 gebildete, geschlossene Ringkontur bedarfsweise geöffnet und verschlossen werden kann. Hierzu weist der Sicherungsabschnitt 31 einen Verschluss 33, der vorzugsweise aus zwei einander komplementären Rastteilen 33a, 33b gebildet ist, und ein Scharnier 35, vorzugsweise ein Filmscharnier, auf. Nach Öffnen des Verschlusses 33 kann ein verschwenkbarer Abschnitt 31 a des Sicherungsabschnitts 31 gegenüber einem mit dem Klammerabschnitt 30 verbundenen feststehenden Abschnitt 31 b um das Scharnier 35 derart quer zur Längsachse X-X verschwenkt werden, dass die zweite Teilöffnung 02 einschließlich des in dem Klammerabschnitt 30 befindlichen umfangsgemäß offenen Bereiches 32 freigegeben wird. Damit ist ein axiales Stecken eines Kupplungsteils 2, 4 in das Halteelement 18 zur Vormontage nicht notwendig. Die Kupplungsteile 2, 4 können auch zuerst miteinander verbunden werden, wobei zur Montage das geöffnete Halteelement 18 manschettenartig um die verbundenen Kupplungsteile 2, 4 gelegt und dann durch Verschwenken des verschwenkbaren Abschnitts 31a (Pfeil 37) und Schließen des Verschlusses 33 die geschlossene Ringkontur um die Ringöffnung O hergestellt wird. Die radiale Verschiebung der verbundenen Kupplungsteile 2, 4 in die Endmontageposition (Fig. 3) kann vor oder nach dem Schließen des Verschlusses 33 erfolgen.

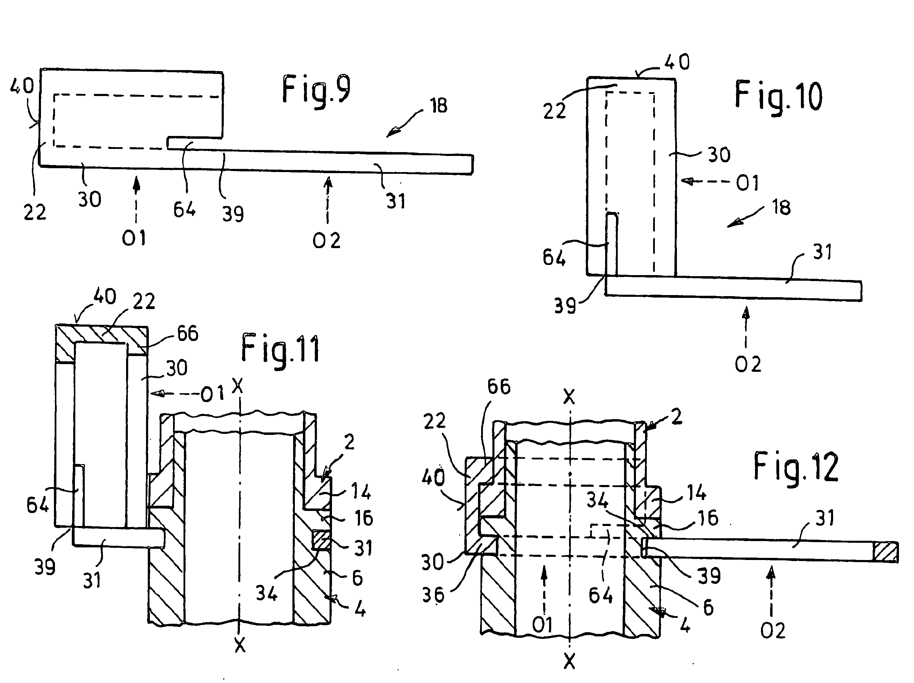

Eine weitere vorteilhafte Ausführungsform der Erfindung der ersten Ausführung zeigen Fig. 9 bis 12. Insbesondere sind in diesen Figuren die Montagephasen eines Halteelementes 18 einer weiteren Ausführung einer erfindungsgemäßen Steckverbindung dargestellt, wobei Fig. 9 und 10 das Halteelement 18 zunächst separat zeigen.

Das Halteelement 18 gemäß Fig. 9 unterscheidet sich von der in Fig. 3 dargestellten Ausführung dadurch, dass sich zwischen dem Klammerabschnitt 30 und dem Sicherungsabschnitt 31 ein Faltschamier 39 befindet. Um dieses Faltschamier 39 kann der Klammerabschnitt 30 aus der in Fig. 9 gezeigten gestreckten Lage der Abschnitte 30, 31 gegenüber dem Sicherungsabschnitt 31 um 90° verschwenkt werden, so dass auch die beiden Teilöffungen 01, 02 rechtwinklig zueinander stehen, wie dies Fig. 10 zeigt.

Nach dem Verschwenken bzw. Abknicken kann das vorzumontierende Kupplungsteil - im vorliegenden Fall wiederum das Steckerteil 4 - in die Teilöffnung 02 im Halteelement 18 gesteckt werden. Das Stecken ist dabei durch die abgewinkelte gegenseitige Lage von Klammerabschnitt 30 und Sicherungsabschnitt 31 vereinfacht, weil es rein radial - also ohne ein axiales Einfädeln des Kupplungsteils - erfolgen kann. Der um 90° verschwenkte Klammerabschitt 30 wird dabei über das freie Ende des Steckerschaftes 6 geführt. Wie Fig. 11 zeigt, die den so hergestellten Vormontagezustand - allerdings schon mit nachfolgend aufgestecktem Muffenteil 2 - zeigt, ist dann der Grundkörper des Klammerabschnitts 30 parallel zur Längsachse X-X des Kupplungsteils 4 ausgerichtet und liegt in platz- bzw. montageraumsparender Weise am Kupplungteil 4 an.

Der Grundkörper des Sicherungsabschnitts 31 ist dabei rechtwinklig zur Längsachse X-X des Kupplungsteils 4 ausgerichtet.

Zur Endmontage wird durch ein Zurückschwenken um das Faltschamier 39 zunächst der in Fig. 9 gezeigte gestreckte Zustand wieder hergestellt. Danach erfolgt - wie oben beschrieben - die radiale Verschiebung des Halteelementes 18, so dass die miteinander verbundenen Kupplungsteile 2, 4 in die erste Teilöffung 01 gelangen und im Klammerabschnitt 30 gehalten sind. Hierbei ist es von Vorteil, wenn die Anordnung des Faltscharniers 39 - wie in Fig. 12 gezeigt - derart gewählt ist, dass sich dieses im Montagezustand in der Ringnut 34 hinter dem Haltesteg 16 befindet. Ein Abknicken des Sicherungsabschnittes 31 gegenüber dem Klammerabschnitt 30 ist dadurch im Montagezustand unterbunden.

Fig. 12 veranschaulicht auch, dass das Halteelement 18 in der Montageposition das Steckerteil 4 vollständig umgibt, während in der dargestellten Ausführung durch die geringere axiale Breite des Sicherungsabschnitts 31 als die des Klammerabschnitts 30 und durch die axiale Anordnung des Sicherungsabschnitts 31 im Bereich des Ringbundes 36, mit dem auch er einstückig ausgebildet ist, das Muffenteil 2, insbesondere dessen Flansch 14, nur vom Klammerabschnitt 30 und zwar teilweise umfasst wird.

Die in Fig. 13 und 14 dargestellten Hauptansichten (Stimansicht und Seitenansicht) eines Halteelementes 18 einer weiteren Ausführung einer erfindungsgemäßen Steckverbindung der ersten Ausführung sind wiederum denen in Fig. 3 und 4 ähnlich. Ein Unterschied besteht hier zunächst darin, dass sich die Teilöffnungen O1, 02 nicht derart durchdringen, dass die Ringöffnung O im Querschnitt gesehen die Form einer in der Mitte unvollständig eingeschnürten Acht, sondern die Form eines Langlochs mit ebenen Längsseiten aufweist. Dadurch sind das Einstecken des vorzumontierenden Kupplungsteils 2, 4 und auch die radiale Montagebewegung der miteinander verbundenen Kupplungsteile 2, 4 vereinfacht. Um bei der vergrößerten Weite der Ringöffnung O dennoch eine hohe Sicherheit für das Verbleiben der Kupplungsteile 2, 4 in ihrer Montageposition zu gewährleisten, ist vorgesehen, dass der in dem Klammerabschnitt 30 befindliche umfangsgemäß offene Bereich 32 durch einen separaten verschwenkbaren Umlegebügel 42 verschließbar ist. Der Umlegebügel 42 ist einendig an einem Scharnier 44, das sich an einem Ende des Klammerabschnitts 30 befindet, schwenkbar aufgehängt und anderendig über einen Verschluss 46, der vorzugsweise aus zwei einander komplementären Verschlussteilen 46a, 46b gebildet ist, an dem anderen Ende des Klammerabschnitts 30 befestigbar. Ähnlich wie der verschwenkbare Abschnitt 31 a des Sicherungsabschnitts 31 bei der Ausführung gemäß Fig. 8 kann der Umlegebügel 42 quer zur Längsachse X-X verschwenkt werden. In geschlossenem Zustand verschließt der Umlegebügel 42 dabei die erste Teilöffnung 01 vollständig, indem er den umfangsgemäß offenen Bereich 32 des Klammerabschnitts 30 überbrückt. Im Montagezustand werden somit auch beide Kupplungsteile 2, 4 vollständig - und zwar formschlüssig - durch das Halteelement 18 umfasst.

Nach der Endmontage umgreift der Umlegebügel 42 manschettenartig und formschlüssig die verbundenen Kupplungsteile 2, 4 und unterbindet nach dem Schließen des Verschlusses 46 deren radiale Verschiebbarkeit. Die Halterung innerhalb der ersten Teilöffnung O1 wird somit auf einen Winkel β von 360° vergrößert. Der Umlegebügel 42 kann dabei bevorzugt im Querschnitt gesehen - wie der Halteabschnitt 22 des Klammerabschnitts 30 - ebenfalls C-förmig ausgebildet sein, so dass er die Haltestege 14, 16 der Kupplungsteile 2, 4 form- und gegebenfalls auch kraftschlüssig umschließt.

Eine weitere grundsätzlich mögliche Ausführungsart einer erfindungsgemäßen Steckverbindung der zweiten Ausführung veranschaulichen Fig. 15 bis 17. Die Besonderheit dieser Ausführungsart besteht darin, dass das Halteelement 18 nicht wie bei den vorstehend beschriebenen Ausführungen einteilig ist oder zumindest aus unlösbar verbundenen Einzelteilen besteht, sondern dass das Halteelement 18 aus zwei vollständig lösbar miteinander verbindbaren separaten Haltekomponenten 18a, 18b besteht. Die erste Haltekomponente 18a ist dabei als Einzelteil in Fig. 15 dargestellt. Fig. 16 zeigt die erfindungsgemäße Steckverbindung mit dieser Haltekomponente 18a und einer Ausführung der zweiten Haltekomponente 18b und Fig. 17 eine weitere Ausführung der zweiten Haltekomponente 18b, die als Einzelteil mit der ersten Haltekomponente 18a verbunden ist.

Das erfindungsgemäße Merkmal, dass das Halteelement 18 ringförmig ausgebildet ist, wobei es mit einer umfangsgemäß geschlossenen Ringkontur im Vormontagezustand eines der beiden Kupplungsteile 2, 4 und im Montagezustand beide Kupplungsteile 2, 4 vollständig umschließt, ist dabei für beide separaten Haltekomponenten 18a, 18b des Halteelementes 18 verwirklicht.

Wie Fig. 15 zeigt, die eine Stirnansicht der ersten Haltekomponente 18a des Halteelementes 18 wiedergibt, besteht ein Unterschied dieser Ausführung einer erfindungsgemäßen Steckverbindung der zweiten Ausführung zu den übrigen Ausführungen darin, dass nicht zwei einander durchdringende Teilöffnungen 01, 02 zur Bildung der Ringöffnung O, sondern nur eine einzige im Querschnitt kreisförmige Ringöffnung O mit dem Mittelpunkt M vorgesehen ist. Des Weiteren ist auch keine Unterteilung in einen Klammerabschnitt 30 und einen Sicherungsabschnitt 31 vorgesehen. Die erste Haltekomponente 18a des Halteelementes 18 weist dabei aber eine ähnliche Struktur wie die siebente Ausführung der erfindungsgemäßen Steckverbindung auf, bei der die Ringöffnung O bzw. deren umfangsgemäß offener Bereich 32 durch den separaten verschwenkbaren Umlegebügel 42 verschließbar ist.

Bei dieser Ausführung der erfindungsgemäßen Steckverbindung der zweiten Ausführung ist die erste Haltekomponente 18a des Halteelementes 18 aus zwei um ein Scharnier 48, vorzugsweise ein Filmscharnier, verschwenkbare bügelartige Halbschalen 50a, 50b gebildet, die beide jeweils einen partiellen Halteabschnitt 23a aufweisen. Dieser dient nicht zum vollständigen Umgreifen der Haltestege 14, 16 der Kupplungsteile 2, 4, sondern liegt nur einseitig in der radialen Umfangsnut 34 des Haltestegs 16 des vorzumontierenden Kupplungsteils 4 an. Der partielle Halteabschnitt 23a übergreift dabei, wie dies in Fig. 16 dargestellt ist, den Fixierringsteg 38, dessen Vorhandensein in diesem Fall nicht - wie bei der ersten Ausführung - nur optional, sondern notwendig erforderlich ist.

Die Halbschalen 50a, 50b weisen wiederum einen Verschluss 52 auf, der vorzugsweise aus zwei einander komplementären, insbesondere miteinander verrastbaren Verschlussteilen 52a, 52b gebildet ist, die sich am jeweiligen freien Ende der Halbschalen 50a, 50b befinden.

Bei der Vormontage wird die erste Haltekomponente 18a des Halteelementes 18 manschettenartig und formschlüssig um das vorzumontierende Kupplungsteil 4 gelegt und der Verschluss 52 geschlossen. Danach wird die zweite Haltekomponente 18b des Halteelementes 18 über die erste Haltekomponente 18a montiert. Hierbei kann die Verbindung dadurch erfolgen, dass die erste Haltekomponente 18a als Verbindungsmittel 54 ein Außengewinde 54a und die zweite Haltekomponente 18b als Verbindungsmittel 56 ein Innengewinde 56a aufweist, so dass die zweite Haltekomponente 18b nach der Art einer Überwurfmutter mit der ersten Haltekomponente 18a verbunden werden kann, wie dies in Fig. 16 dargestellt ist.

Alternativ können die Verbindungsmittel 54, 56 - wie in Fig. 17 gezeigt - auch als zueinander komplementäre Rastelemente 54b, 56b, einem Außenrastelement 54b an der ersten Haltekomponente 18a und einem Innenrastelement 56b an der zweiten Haltekomponente 18b, ausgebildet sein.

Die Struktur, in der die Verriegelungseinrichtung 10 einerseits aus den beiden äußeren, radialen, flanschartigen und im eingesteckten Zustand axial, in Steckrichtung 20 benachbarten Haltestegen 14, 16 der beiden Kupplungsteile 2, 4 und andererseits aus einem Halteelement 18 besteht, welches mit dem im Axialschnitt C-förmigen Halteabschnitt 22 die Haltestege 14, 16 axial und radial umgreift, wird bei der achten Ausführung der Erfindung dadurch realisiert, dass der C-förmige Halteabschnitt 22 einerseits durch den partiellen Halteabschnitt 23a an der ersten Haltekomponente 18a und andererseits durch einen weiteren partiellen Halteabschnitt 23b an der zweiten Haltekomponente 18b gebildet ist.

Für diese Ausführungsart der erfindungsgemäßen Steckverbindung der zweiten Ausführung ist dabei - wie bei der ersten Ausführung der Erfindung - konkret vorgesehen, dass zur Endmontage eine Verrastung des Muffenteils 2 mit dem Halteelement 18 erfolgt, wobei die Ausbildung des Rastelements 24 in Fig. 16 und 17 insbesondere eine solche ist wie in Fig. 6.

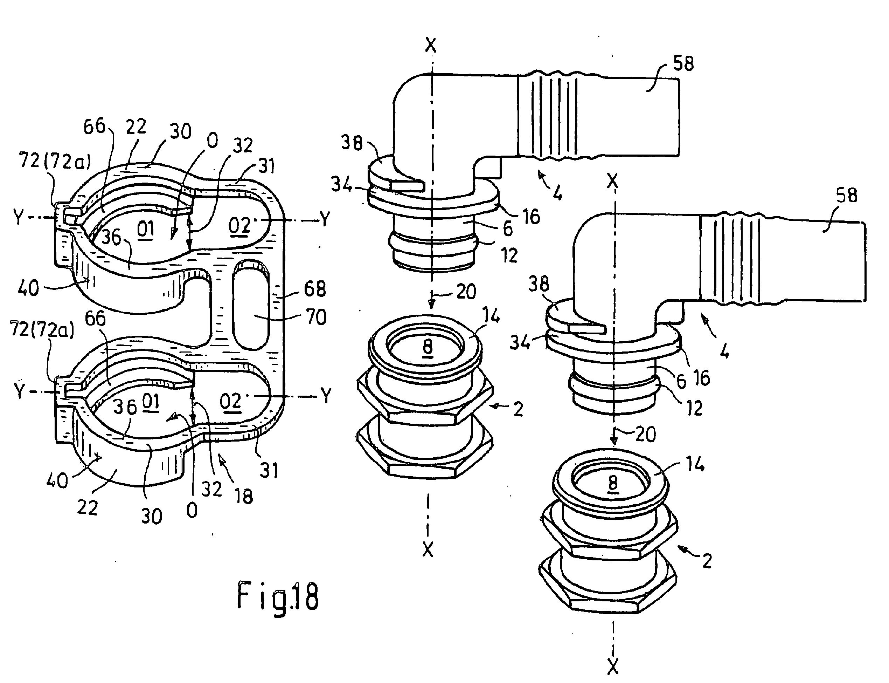

Ein Spezifikum der in Fig. 18 bis 20 dargestellten Ausführungen von erfindungsgemäßen Steckverbindungen der ersten Ausführung besteht zunächst darin, dass zwei Halteelemente 18 - es könnten auch mehr sein - zur fest beabstandeten und vorzugsweise auch gleichzeitigen Arretierung von jeweils zwei oder mehr Steckerteilen 4 und Muffenteilen 2, insbesondere über einen vorzugsweise im Bereich eines Teils oder des gesamten Sicherungsabschnittes 31 angeordneten Verbindungssteg 68, miteinander verbunden sind. Der Verbindungssteg 68 kann dabei, wie der zeichnerischen Darstellung entnommen werden kann, in materialsparender Weise mit einer Öffnung 70 versehen sein.

Die Halteelemente 18 dieser Ausführung sind dabei ähnlich ausgeführt wie gemäß den Ausführungen in Fig. 2 bis 4a. Bei dem Muffenteil 2 handelt es sich um ein Schraubenteil und bei dem Steckerteil 4 um einen Winkelstecker.

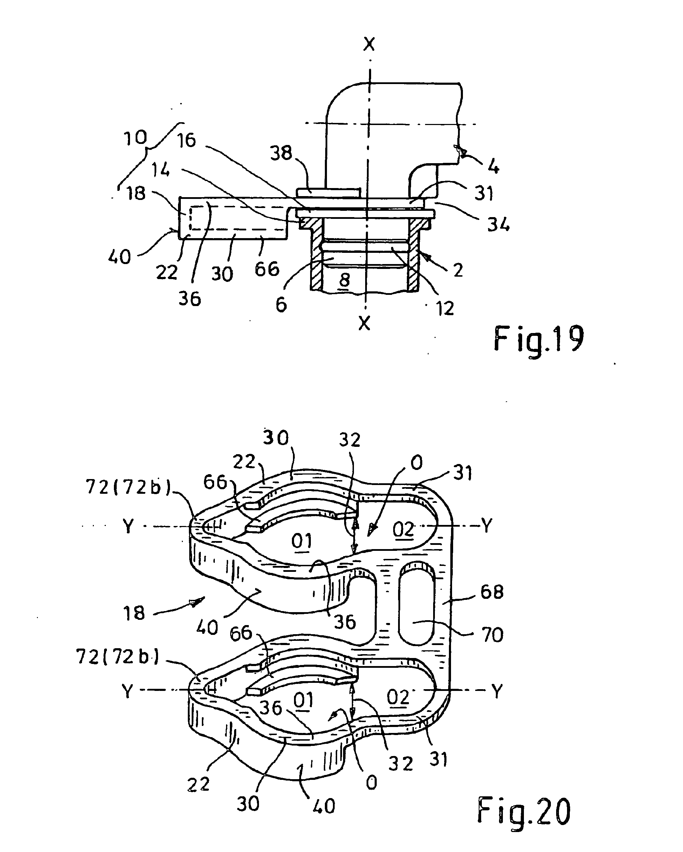

Damit die radiale Verschiebebewegung zur Überführung der Halteelemente 18 aus der in Fig. 19 gezeigten Vormontagestellung in ihre Montagestellung ohne Schwierigkeiten gleichzeitig realisiert werden kann, sollte dabei - wie in Fig. 18 und 20 dargestellt - vorgesehen sein, dass die miteinander verbundenen Halteelemente 18 mit ihren Mittelebenen Y-Y parallel zueinander orientiert sind.

Wie des Weiteren die Ausführungen der Halteelemente 18 in Fig. 18 und 20 zeigen, weist jeweils der elastische Klammerabschnitt 30 - beispielsweise in Analogie zur Ausführung gemäß Fig. 3 - zur Erzielung der radialelastischen Aufweitbarkeit und Verformbarkeit an einer Umfangsstelle einen umfangsgemäß offenen Bereich 32 auf.

Hierzu war oben bereits ausgeführt worden, dass der Ring zumindest im Bereich des Klammerabschnitts 30 zur Erzielung dieser Verformbarkeit aus einem entsprechenden Material gefertigt sein bzw. entsprechend dimensionierte geometrische Abmessungen aufweisen kann. Die Ausführungen zeigen noch zwei alternative Möglichkeiten einer entsprechenden konstruktiven Gestaltung. So ist jeweils ein Bereich 72 des Klammerabschnitts 30, der dem umfangsgemäß offenen Bereich 32 diametral gegenüber liegt, scharnierartig gestaltet. Der scharnierartige Bereich 72 kann dabei beispielsweise - wie in Fig. 18 gezeigt - als Schwächungsstelle 72a oder - wie in Fig. 20 gezeigt - als eine gegenüber dem übrigen Verlauf des Klammerabschnitts 30 radial ausgebauchte Bogenstelle 72b, insbesondere mit kleinerem Radius des Bogens als der Radius der ersten Teilöffnung 01, ausgeführt sein.

Die Erfindung ist nicht auf die dargestellten Ausführungsbeispiele beschränkt, sondern umfasst auch alle im Sinne der Erfindung gleichwirkenden Ausführungen. So können die Kupplungsteile 2, 4 auf ihren der Steckverbindungsseite gegenüber liegenden Seiten grundsätzlich beliebige Anschlußelemente aufweisen. In den dargestellten Ausführungen, insbesondere veranschaulicht durch Fig. 1, 2 und 18, weist das Steckerteil 4 einen Anschlußdom 58 für eine Fluid-Leitung 60, wie für ein Rohr oder einen Schlauch, auf. Das Muffenteil 2 kann - wie Fig. 1 und 2 zeigen - einen Einschraubstutzen 62 besitzen. Es ist auch möglich, dass mindestens eines der Kupplungsteile 2, 4 einstückig mit einem bestimmten fluidführenden Aggregat ausgebildet ist oder als Schraubenteil wie in Fig. 18.

Des Weiteren kann der Fachmann zusätzliche vorteilhafte technische Maßnahmen vorsehen, ohne dass der Rahmen der Erfindung verlassen wird. So kann beispielsweise - wie Fig. 4, 9 bis 12 und 14 zeigen - im Klammerabschnitt 30 eine radiale Schlitzung 64 vorgesehen sein, durch die die radiale Nachgiebigkeit des Halteabschnitts 22 begünstigt wird. In Fig. 4a ist eine Ausführung ohne diese Schlitzung gezeigt.

Schließlich kann beispielsweise - wie dies in Fig. 3 durch die punktiert eingezeichnete Konturlinie K veranschaulicht ist - insbesondere bei einem integral ausgebildeten Halteabschnitt 22 vorgesehen sein, dass der am Haltesteg 14 des Muffenteils 2 anliegende radial nach innen weisende Steg 66 des Halteelementes 18, der einen Balken des C bildet, mit über den Umfang des Klammerabschnitts 30 veränderlicher Breite ausgeführt wird, um das Rast- und/oder Fixierverhalten des Muffenteils 2 in geeigneter vorbestimmter Weise festzulegen.

### Bezugszeichenliste

- 2: Muffenteil (Kupplungsteil)
- 4: Steckerteil (Kupplungsteil)
- 6: Steckerschaft von 4
- 8: Aufnahmeöffnung von 2
- 10: Verriegelungseinrichtung
- 12: Dichtring auf 4
- 14: Haltesteg von 2
- 16: Haltesteg von 4
- 18: Halteelement für 14, 16
- 18a: erste Haltekomponente von 18 (Fig. 15-17)
- 18b: zweite Haltekomponente von 18 (Fig. 15-17)
- 20: Steckrichtung von 4 in 2
- 22: Halteabschnitt von 18
- 22a - 22e: Einzelhalteelemente von 22 (Fig. 7)
- 23a: partieller Halteabschnitt von 22 an 18a
- 23b: partieller Halteabschnitt von 22 an 18b
- 24: Rastelement für 2 an 18
- 26: Schrägfläche von 24
- 28: Haltekante von 24
- 30: Klammerabschnitt von 18
- 31: Sicherungsabschnitt von 18
- 31 a: verschwenkbarer Abschnitt von 31
- 31 b: feststehender Abschnitt von 31
- 32: offener Bereich von 30
- 33: Verschluss von 31
- 33a: Rastteil von 33 an 31 a
- 33b: Rastteil von 33 an 31 b
- 34: radiale Ringnut in 4 für 36
- 35: Scharnier zwischen 31 a und 31 b
- 36: Ringbund von 18
- 37: Schwenkrichtung von 31 a
- 38: Fixierringsteg von 4
- 39: Faltscharnier zwischen 30 und 31
- 40: Umfangswandung von 30
- 42: Umlegebügel an 30 zum Verschluss von 32
- 44: Scharnier zwischen 30 und 42
- 46: Verschluss für 30 und 42
- 46a: Verschlussteil von 46 an 42
- 46b: Verschlussteil von 46 an 30
- 48: Scharnier zwischen 50a und 50b
- 50a: erste Halbschale von 18a
- 50b: zweite Halbschale von 18a
- 52: Verschluss für 50a und 50b
- 52a: Verschlussteil von 52 an 50a
- 52b: Verschlussteil von 52 an 50b
- 54: Verbindungsmittel an 18a für 18b
- 54a: Außengewinde auf 18a
- 54b 54: in Ausbildung als Rastelement
- 56: Verbindungsmittel an 18b für 18a
- 56a: Innengewinde in 18b
- 56b 56: in Ausbildung als Rastelement
- 58: Anschlussdom von 4
- 60: Fluid-Leitung
- 62: Einschraubstutzen von 2
- 64: Schlitzung in 30
- 66: Steg von 18, C-Balken
- 68: Verbindungssteg 18/18 bzw. 31/31
- 70: Öffnung in 68
- 72: scharnierartiger Bereich in 30
- 72a 72: in Ausführung als Schwächungsstelle
- 72b 72: in Ausführung als Bogenstelle

- K: Konturlinie von 22
- M: Mittelpunkt von O (Fig. 15)
- M1: Mittelpunkt von 01
- M2: Mittelpunkt von 02
- O: Ringöffnung von 18
- O1: Teilöffnung von O in 30
- 02: Teilöffnung von O in 31
- X-X: Längsachse von 2, 4
- Y-Y: Mittelebene von 18

- α: Öffnungswinkel von 32
- β: Umschlingungswinkel von 30 für 2, 4

## Patentansprüche

1. Steckverbindung für Fluid-Leitungen, bestehend aus zwei zusammensteckbaren Kupplungsteilen (2, 4), und zwar einem Muffenteil (2) und einem Steckerteil (4), wobei das Steckerteil (4) mit einem Steckerschaft (6) dichtend in eine Aufnahmeöffnung (8) des Muffenteils (2) einsteckbar und im eingesteckten Zustand Ober eine Verriegelungseinrichtung (10) lösbar arretierbar ist, wobei die Verriegelungseinrichtung (10) einerseits aus zwei äußeren, radialen, flanschartigen und im eingesteckten Zustand axial in Steckrichtung (20) benachbarten Haltestegen (14, 16) der beiden Kupplungsteile (2, 4) und andererseits aus einem Halteelement (18) besteht, welches mit mindestens einem im Axialschnitt C-förmigen Halteabschnitt (22) die Haltestege (14, 16) der beiden Kupplungsteile (2, 4) axial und radial umgreift, wobei das Halteelement (18) ringförmig ausgebildet ist und mit einer umfangsgemäß geschlossenen Ringkontur in einem Vormontagezustand und im Montagezustand mindestens eines der beiden Kupplungsteile (2, 4) umgibt, wobei das Halteelement (18) derart ausgebildet und an einem der beiden Kupplungsteile (2, 4) derart unverlierbar vormontierbar ist, dass es einerseits axial und radial fixiert und andererseits im Bereich des Halteabschnittes (22) radial elastisch beweglich ist,
**dadurch gekennzeichnet, dass** das Halteelement (18) derart vormontierbar ist, dass es ausschließlich in zwei Positionen, der Vormontagestellung und der Montagestellung, fixierbar und durch eine radiale Verschiebung aus der Vormontagestellung in die Montagestellung beweglich ist.

2. Steckverbindung nach Anspruch 1,
**dadurch gekennzeichnet, dass** das Halteelement (18) im Bereich des Halteabschnittes (22) sowie der Haltesteg (14) eines Kupplungsteils (2) in Anpassung aneinander zur Bildung einer in Steckrichtung (20) formschlüssigen Rastverbindung ausgebildet sind.

3. Steckverbindung nach Anspruch 1 oder 2,
**dadurch gekennzeichnet, dass** das Halteelement (18) einen elastischen Klammerabschnitt (30) aufweist, der zur radialelastischen Verformbarkeit an einer Umfangsstelle einen umfangsgemäß offenen Bereich (32) aufweist, welcher insbesondere mittels eines Umlegebügels (42) verschließbar ist.

4. Steckverbindung nach Anspruch 3,
**dadurch gekennzeichnet, dass** in den Klammerabschnitt (30) eine radiale Schlitzung (64) eingebracht ist.

5. Steckverbindung nach einem der Ansprüche 1 bis 4,
**dadurch gekennzeichnet, dass** der Halteabschnitt (22) integral oder aus mindestens zwei, vorzugsweise fünf, Einzelhalteelementen (22a, 22b, 22c, 22d, 22e) gebildet ist, die in insbesondere symmetrischer Umfangsverteilung verteilt sind.

6. Steckverbindung nach einem der Ansprüche 1 bis 5,
**dadurch gekennzeichnet, dass** ein Kupplungsteil (4) für die Vormontage-Fixierung des Halteelementes (18) eine radiale Ringnut (34) zur Aufnahme eines korrespondierenden radialen Ringbundes (36) des Halteelementes (18) aufweist, wobei der Ringbund (36) durch eine quer zur Steckrichtung (20) gerichtete Einführbewegung und unter elastischer Aufweitung des Halteelementes (18) in die Ringnut (34) einführbar ist, wobei die radiale Ringnut (34) des Kupplungsteils (4) vorzugsweise im Steckerschaft (6), insbesondere axial zwischen dem Haltesteg (16) und einem zusätzlichen Fixierringsteg (38) gebildet ist.

7. Steckverbindung nach einem der Ansprüche 3 bis 6,
**dadurch gekennzeichnet, dass** der Klammerabschnitt (30) sich über einen Umfangswinkel (β) erstreckt, der mindestens derart groß bemessen ist, dass im beim Steckvorgang maximal gespreizten Zustand der umfangsgemäß offene Bereich (32) bezüglich seiner lichten Öffnungsweite stets kleiner als der jeweils zugehörige Durchmesser eines Kupplungsteils (4) ist.

8. Steckverbindung nach einem der Ansprüche 3 bis 7,
**dadurch gekennzeichnet, dass** der im Axialschnitt C-förmige Halteabschnitt (22) des Halteelementes (18) aus einem Rastelement (24) und einem axial gegenüberliegenden Umfangsabschnitt des Ringbundes (36) sowie aus einem Teil einer Umfangswandung (40) des Klammerabschnitts (30) gebildet ist.

9. Steckverbindung nach einem der Ansprüche 1 bis 8,
**dadurch gekennzeichnet**, dassdasHalteelement(18)als Kunststoff-Formteil, vorzugsweise als Zwei-Komponenten-Kunststoff-Formteil, ausgebildet ist, wobei das Halteelement (18) insbesondere als einteiliger Ring mit einem, insbesondere hartelastisch verformbaren, Klammerabschnitt (30) und einem, insbesondere weichelastisch verformbaren, Sicherungsabschnitt (31) ausgebildet ist, wobei in bevorzugter Weise der Klammerabschnitt (30) aus glasfaserverstärktem Polyamid, welches insbesondere einen Faseranteil im Bereich von 20 bis 50 Prozent enthält, und der Sicherungsabschnitt (31) aus einem gegebenenfalls glasfaserverstärkten Polyamid, welches insbesondere einen Faseranteil im Bereich von 0 bis 20 Prozent aufweist, oder aus einem thermoplastischen Elastomer hergestellt ist.

10. Steckverbindung nach Anspruch 9,
**dadurch gekennzeichnet**, dassdasHalteelement(18)ein Faltscharnier (39) zwischen dem Klammerabschnitt (30) und dem Sicherungsabschnitt (31) aufweist, wodurch die beiden Abschnitte (30, 31) um 90° gegeneinander verschwenkbar sind.

11. Steckverbindung nach einem der Ansprüche 3 bis 10,
**dadurch gekennzeichnet, dass** ein radial nach innen weisender Steg (66) des Halteelementes (22), der einen Balken des C des im Axialschnitt C-förmigen Halteabschnitts (22) bildet, über den Umfang des Klammerabschnitts (30) mit veränderlicher Breite ausgeführt ist (Konturlinie K).

12. Steckverbindung nach einem der Ansprüche 9 bis 11,
**dadurch gekennzeichnet, dass** zwei oder mehr Halteelemente (18) zur fest beabstandeten und vorzugsweise auch gleichzeitigen Arretierung von jeweils zwei oder mehr Steckerteilen (4) und Muffenteilen (2), insbesondere über einen vorzugsweise im Bereich des Sicherungsabschnittes (31) angeordneten Verbindungssteg (68), miteinander verbunden sind.

13. Steckverbindung nach Anspruch 12,
**dadurch gekennzeichnet, dass** die zwei oder mehr miteinander verbundenen Halteelemente (18) mit ihren Mittelebenen (Y-Y) parallel zueinander orientiert sind.

14. Steckverbindung nach einem der Ansprüche 3 bis 13,
**dadurch gekennzeichnet, dass** ein, insbesondere dem umfangsgemäß offenen Bereich (32) diametral gegenüber liegender, Bereich (72) des Klammerabschnitts (30), scharnierartig gestaltet ist, wobei der scharnierartige Bereich (72) insbesondere als Schwächungsstelle (72a) oder als eine gegenüber dem übrigen Verlauf des Klammerabschnitts (30) radial ausgebauchte Bogenstelle (72b), mit insbesondere kleinerem Radius des Bogens als der Radius einer ersten Teilöffnung (O1) einer Ringöffnung (o) des Halteelements (18), ausgeführt ist.

15. Steckverbindung nach dem Oberbegriff des Anspruchs 1,
**dadurch gekennzeichnet, dass** das Halteelement (18) zweiteilig ausgebildet ist und aus einer ersten Haltekomponente (18a) und einer zweiten Haltekomponente (18b) besteht, die lösbar miteinander verbindbar, insbesondere miteinander verschraubbar oder verrastbar, sind.

16. Steckverbindung nach Anspruch 15,
**dadurch gekennzeichnet, dass** der im Axialschnitt C-förmige Halteabschnitt (22) durch einen partiellen Halteabschnitt (23a) an der ersten Haltekomponente (18a) und durch einen weiteren partiellen Halteabschnitt (23b) an der zweiten Haltekomponente (18b) gebildet ist.

## Claims

1. A plug connection for fluid lines, consisting of two coupling parts (2, 4) able to be assembled together, namely a socket part (2) and a connector part (4), wherein the connector part (4) is insertable sealingly into a receiving opening (8) of the socket part (2) by means of a connector shaft (6) and in the inserted state is releasably fixable in position via a locking device (10), wherein the locking device (10) consists on the one hand of two outer, radial, flange-like retaining elongated members (14, 16), axially adjacent in the insertion direction (20) in the inserted state, of the two coupling parts (2, 4) and on the other hand of a retaining element (18) which engages axially and radially around the retaining elongated members (14, 16) of the two coupling parts (2, 4) by means of at least one retaining portion (22) which is C-shaped in axial section, wherein the retaining element (18) is ring-shaped and in a preassembly state and in the assembly state encloses at least one of the two coupling parts (2, 4) by means of an circumferentially closed ring contour, wherein the retaining element (18) is designed and undetachably premountable on one of the two coupling parts (2, 4) in such a manner that on the one hand it is axially and radially fixed and on the other hand it is radially elastically movable in the region of the retaining portion (22), **characterised in that** the retaining element (18) is premountable in such a manner that it is only fixable in two positions, the preassembly position and the assembly position, and is movable from the preassembly position into the assembly position by radial displacement.

2. A plug connection according to claim 1, **characterised in that** the retaining element (18), in the region of the retaining portion (22) thereof, and the retaining elongated member (14) of a coupling part (2) are matched to one another to form a locking connection form-locked in the insertion direction (20).

3. A plug connection according to claim 1 or 2, **characterised in that** the retaining element (18) has an elastic clamp portion (30) with a circumferentially open region (32) at one circumferential site for radial-elastic deformability, which region (32) is in particular closable by means of an enclosing curved-part (42).

4. A plug connection according to claim 3, **characterised in that** radial slots (64) are made in the clamp portion (30).

5. A plug connection according to any one of claims 1 to 4, **characterised in that** the retaining portion (22) is formed integrally or of at least two, preferably five, individual retaining elements (22a, 22b, 22c, 22d, 22e) distributed over the circumference, in particular symmetrically.

6. A plug connection according to any one of claims 1 to 5, **characterised in that** a coupling part (4) for the preassembly fixing of the retaining element (18) has a radial annular groove (34) to receive a corresponding radial annular collar (36) of the retaining element (18), wherein the annular collar (36) is insertable into the annular groove (34) through an insertion motion directed transverse to the insertion direction (20) and with the accompaniment of elastic expansion of the retaining element (18), wherein the radial annular groove (34) of the coupling part (4) is preferably formed in the connector shaft (6), in particular axially between the retaining elongated member (16) and an additional fixing ring elongated member (38).

7. A plug connection according to any one of claims 3 to 6, **characterised in that** the clamp portion (30) extends over a circumferential angle (ß) which is dimensioned to be at least of such a size that in the maximally spread state during the insertion operation, the circumferentially open region (32) is always smaller with regard to its clear opening width than the respective associated diameter of a coupling part (4).

8. A plug connection according to any one of claims 3 to 7, **characterised in that** the retaining portion (22), C-shaped in axial section, of the retaining element (18) is formed of a locking element (24) and an axially opposite circumferential portion of the annular collar (36) as well as of a part of a circumferential wall (40) of the clamp portion (30).

9. A plug connection according to any one of claims 1 to 8, **characterised in that** the retaining element (18) is a plastics moulded part, preferably a two-component plastics moulded part, wherein the retaining element (18) is in particular a one-piece ring with a, in particular hard-elastically deformable, clamp portion (30) and a, in particular soft-elastically deformable, securing portion (31), wherein in a preferred manner the clamp portion (30) is manufactured from glass-fibre reinforced polyamide, which in particular contains a fibre proportion in the range from 20 to 50 percent, and the securing portion (31) from an optionally glass-fibre reinforced polyamide, which in particular has a fibre proportion in the range from 0 to 20 percent, or from a thermoplastic elastomer.

10. A plug connection according to claim 9, **characterised in that** the retaining element (18) has a folding hinge (39) between the clamp portion (30) and the securing portion (31), whereby the two portions (30, 31) are pivotable through 90° in relation to one another.

11. A plug connection according to any one of claims 3 to 10, **characterised in that** a radially inwardly-directed arm (66) of the retaining element (22), which arm forms a bar of the C of the retaining portion (22) of C-shape in axial section, is designed to vary in width over the circumference of the clamp portion (30) (contour line K).

12. A plug connection according to any one of claims 9 to 11, **characterised in that** for the locking in place at a fixed distance apart and preferably also in a simultaneous manner of in each case two or more connector parts (4) and socket parts (2), two or more retaining elements (18) are connected to one another, in particular via a connecting web (68) preferably arranged in the region of the securing portion (31).

13. A plug connection according to claim 12, **characterised in that** the two or more retaining elements (18) connected to one another are oriented with their centre planes (Y-Y) parallel to one another.

14. A plug connection according to any one of claims 3 to 13, **characterised in that** a region (72), in particularly diametrically opposite the circumferentially open region (32), of the clamp portion (30) is fashioned to be hinge-like, wherein the hinge-like region (72) is in particular in the form of a weakening site (72a) or a curved site (72b) bulged radially with regard to the remainder of the course of the clamp portion (30), with in particular a smaller radius of the curve than the radius of a first partial opening (01) of an annular opening (O) of the retaining element (18).

15. A plug connection according to the preamble of claim 1, **characterised in that** the retaining element (18) is two-part and consists of a first retaining component (18a) and a second retaining component (18b) which are detachably connectable to one another, in particular can be screwed or locked to one another.

16. A plug connection according to claim 15, **characterised in that** the retaining portion (22) of C-shaped axial section is formed by a partial retaining portion (23a) at the first retaining component (18a) and by another partial retaining portion (23b) at the second retaining component (18b).

## Revendications

1. Connecteur à fiche pour conduites de fluides, constitué de deux parties d'accouplement (2, 4) connectables entre elles, à savoir une partie à manchon (2) et une partie à fiche (4), dans lequel la partie à fiche (4) peut être insérée de manière étanche avec une tige de connecteur (6) dans une ouverture de logement (8) de la partie à manchon (2) et verrouillable de manière amovible dans l'état connecté grâce à un dispositif de verrouillage (10),dans lequel le dispositif de verrouillage (10) est constitué d'une part de deux traverses de maintien (14, 16) des deux parties d'accouplement (2, 4), adjacentes, externes, radiales, en forme de brides et axiales dans le sens de connexion (20) dans l'état connecté, et d'autre part d'un élément de maintien (18), qui entoure, avec au moins une section de maintien (22) en forme de C en coupe axiale, les traverses de maintien (14, 16), l'élément de maintien (18) étant de forme annulaire et entourant, avec un contour annulaire fermé sur la périphérie, dans un état de pré-montage et dans l'état de montage, au moins une des deux parties d'accouplement (2, 4), dans lequel l'élément de maintien (2, 4) est conçu et peut être pré-monté de manière captive, de façon à ce qu'il soit d'une part fixé axialement et radialement et d'autre part mobile radialement de manière élastique au niveau de la section de maintien (22), **caractérisé en ce que** l'élément de maintien (18) peut être pré-monté de façon à ce qu'il puisse être fixé exclusivement dans deux positions, la position de pré-montage et la position de montage et de façon à ce qu'il soit mobile grâce à un mouvement radial de la position de pré-montage vers la position de montage.

2. Connecteur à fiche selon la revendication 1, **caractérisé en ce que** l'élément de maintien (18) au niveau de la section de maintien (22), ainsi que la traverse de maintien (14) d'une partie d'accouplement (2), sont conçus de manière adaptée l'un à l'autre pour former une connexion par encliquetage grâce à une complémentarité de forme dans le sens de connexion (20).

3. Connecteur à fiche selon la revendication 1 ou 2, **caractérisé en ce que** l'élément de maintien (18) comprend une section de serrage élastique (30), qui comprend une zone ouverte sur la périphérie (32) pour la déformabilité radiale élastique, cette zone pouvant être fermée notamment à l'aide d'un étrier (42).

4. Connecteur à fiche selon la revendication 3, **caractérisé en ce que**, dans la section de serrage (30), se trouve une fente radiale (64).

5. Connecteur à fiche selon l'une des revendications 1 à 4, **caractérisé en ce que** la section de maintien (22) est constituée d'une seule pièce ou d'au moins deux, de préférence cinq éléments de maintien individuels (22a, 22b, 22c, 22d, 22e) répartis régulièrement sur la périphérie.

6. Connecteur à fiche selon l'une des revendications 1 à 5, **caractérisé en ce qu'**une partie d'accouplement (4) comprend, pour la fixation de pré-montage de l'élément de maintien (18), une rainure annulaire radiale (34) permettant de loger un collet annulaire radial (36) correspondant de l'élément de maintien (18), dans lequel le collet annulaire (36) peut être inséré, grâce à un mouvement d'insertion dirigée transversalement par rapport à la direction de connexion (20) et en élargissant de manière élastique l'élément de maintien (18) dans la rainure annulaire (34), la rainure annulaire radiale (34) de la partie d'accouplement (4) étant de préférence dans la tige du connecteur (6), notamment axialement entre la traverse de maintien (16) et une traverse annulaire de fixation (38).

7. Connecteur à fiche selon l'une des revendications 3 à 6, **caractérisé en ce que** la section de serrage (30) s'étend sur un angle périphérique (β) dont la valeur est au moins telle que, dans l'état d'extension maximale de la zone ouverte sur la périphérie (32) lors du processus de connexion, elle soit, en ce qui concerne son ouverture, toujours inférieure au diamètre correspondant d'une partie d'accouplement (4).

8. Connecteur à fiche selon l'une des revendications 3 à 7, **caractérisé en ce que** la section de maintien (22) en forme de C en coupe axiale de l'élément de maintien (18) est constitué d'un élément d'encliquetage (24) et d'une section périphérique axiale opposée du collet annulaire (36) ainsi que d'une partie d'une paroi périphérique (40) de la section de serrage (30).

9. Connecteur à fiche selon l'une des revendications 1 à 8, **caractérisé en ce que** l'élément de maintien (18) se présente sous la forme d'une pièce moulée en matière plastique, de préférence sous la forme d'une pièce moulée en matière plastique à deux composants, dans l'élément de maintien (18) se présente notamment sous la forme d'une bague monobloc avec une section de serrage (30) déformable de manière dure et élastique et d'une section de sécurisation (31) déformable de manière souple et élastique, la section de serrage (30) étant de préférence constituée de polyamide renforcé de fibres de verre, qui contient notamment une proportion de fibres de 20 à 50% et la section de sécurisation (31) est constituée d'un polyamide également renforcé de fibres de verre, qui contient notamment une proportion de fibres de verre de 0 à 20% ou d'un élastomère thermoplastique.

10. Connecteur à fiche selon la revendication 9, **caractérisé en ce que** l'élément de maintien (18) comprend une charnière (39) entre la section de serrage (30) et la section de sécurisation (31), les deux sections (30, 31) pouvant être pivotés de 90° l'un par rapport à l'autre.

11. Connecteur à fiche selon l'une des revendications 3 à 10, **caractérisé en ce qu'**une traverse (66) orientée radialement vers l'intérieur de l'élément de maintien (22), qui constitue une barre du C de la section de maintien (22) en forme de C en coupa axiale, est formée sur la périphérie de la section de serrage (30) avec une largeur variable (ligne de contour K).

12. Connecteur à fiche selon l'une des revendications 9 à 11, **caractérisé en ce que** deux éléments de maintien (18) ou plus sont reliés entre eux avec une distance fixe et de préférence pour le blocage simultané de deux pièces de connecteurs (4) et pièces de manchon (2) ou plus, notamment par l'intermédiaire d'une traverse de liaison (68) disposée de préférence au niveau de la section de sécurisation (31).

13. Connecteur à fiche selon la revendication 12, **caractérisé en ce que** les deux ou plus éléments de maintien (18) reliés entre eux sont orientables les uns par rapport aux autres de manière parallèle avec leurs plans centraux (Y-Y).

14. Connecteur à fiche selon l'une des revendications 3 à 13, **caractérisé en ce qu'**une partie (72) de la section de serrage (30), notamment la partie ouverte (32) opposée diamétralement sur la périphérie, présente une forme de charnière, la partie en forme de charnière (72) étant conçue comme un point faible (72a) ou comme un endroit coudé (72b) radialement galbé dans le sens inverse du tracé habituel de la section de serrage (30), avec notamment un rayon de coude inférieur au rayon d'une première ouverture partielle (O1) d'une ouverture annulaire (O) de l'élément de maintien (18).

15. Connecteur à fiche selon le concept principal de la revendication 1, **caractérisé en ce que** l'élément de maintien (18) est conçu en deux parties et est constitué d'un premier composant de maintien (18a) et d'un deuxième composant de maintien (18b), pouvant être reliés entre eux, notamment vissés ou encliquetés.

16. Connecteur à fiche selon la revendication 15, **caractérisé en ce que** la section de maintien (22) en forme de C en coupe axiale est constitué d'une section de maintien partielle (23a) sur le premier composant de maintien (18a) et d'une autre section de maintien partielle (23b) sur le deuxième composant de maintien (18b).
